# EUROPEAN PATENT APPLICATION

(11) **EP 4 838 589 A1**
(43) Date of publication of application: **11.11.2026**
(21) Application number: 25305647.7
(22) Date of filing: 06.05.2025
(51) Int. Cl.: H01M 4/88

(54) **METHOD FOR MANUFACTURING A CATALYST LAYER FOR A FUEL CELL**

(71) Applicant: TOYOTA JIDOSHA KABUSHIKI KAISHA, Toyota-shi, Aichi-ken 471-8571 (JP)
(72) Inventor: COTTE, Stéphane, 1140 Brussels (BE); HAEKAL, Adny, 1140 Brussels (BE)
(74) Representative: Cabinet Beau de Loménie

(57) **Abstract**

A method for manufacturing a catalyst layer (2) for a fuel cell, comprising:
- preparing a suspension (9) by mixing a powder composition with a liquid medium, said powder composition comprising catalyst particles,
- depositing the suspension (9) on a substrate (3), and
- heating the deposited suspension (9) to obtain the catalyst layer (2) by drying, characterized in that the method further comprises emitting laser radiations toward the deposited suspension (9) with a laser light source (11) for drying said deposited suspension (9).

## Description

### BACKGROUND OF THE INVENTION

### 1. Field of the invention

The present disclosure relates to a method for manufacturing a catalyst layer for fuel cells.

### 2. Description of Related Art

Fuel cells are electrochemical cells that convert the chemical energy of a fuel (generally hydrogen) and an oxidizing agent (generally oxygen) into electricity through a pair of redox reactions. In a fuel cell electrode, hydrogen is decomposed into hydrogen ions and electrons. The hydrogen ions migrate toward the air electrode through the electrolyte membrane, and the electrons migrate toward the air electrode through conductive lines and loads constituting an external circuit. An oxidizer, generally air, is supplied to the air electrode. In the air electrode, the hydrogen ions and the electrons react with oxygen in the air to generate water. Fuel cells have high energy efficiency and only emit water, and thus are expected to serve as clean energy.

A catalyst layer used in a fuel cell is formed by applying a suspension comprising catalyst particles on a substrate and heating said suspension applied on the substrate to dry the suspension and obtain the catalyst layer. In prior art, the heating step is performed in an oven heating the suspension for drying the catalyst layer.

However, drying the catalyst layer with conventional ovens is time and energy consuming, having low energy efficiency. Moreover, conventional convection ovens for drying fuel cell catalyst layers have an important footprint with large CO2 emissions. Indeed, in prior art battery production methods, 60% of CO2 emissions occur during the drying process.

### SUMMARY

The object of the present invention is to at least substantially remedy the above-mentioned drawbacks.

In this respect, the present disclosure relates to a method for manufacturing a catalyst layer for a fuel cell, comprising:
- preparing a suspension by mixing a powder composition with a liquid medium, said powder composition comprising catalyst particles,
- depositing the suspension on a substrate, and
- heating the deposited suspension to obtain the catalyst layer by drying,
the method further comprising emitting laser radiations toward the deposited suspension with a laser light source for drying said deposited suspension.

Thanks to the laser light source heating the deposited suspension for drying said deposited suspension, the method can provide a catalyst layer with a fast drying speed, faster than the drying time required when using heating with prior art ovens. Indeed, by using a laser light source for heating the deposited suspension to obtain the catalyst layer, the drying time can be reduced from 360s, i.e. when heating with a prior art oven, to 30s when heating thanks to the method according to the invention.

Moreover, using a light laser source during the heating step ensures good energy efficiency and reduces the footprint of the method for manufacturing the catalyst layer.

According to embodiments, the method for manufacturing a catalyst layer according to the invention may also have the following features, alone or in combination.

According to an embodiment, the method further comprises preparing the powder composition by mixing catalyst particles with filler particles.

The powder composition, and therefore the suspension, may be prepared with a plurality of components. According to an embodiment, the powder composition, and therefore the deposited suspension, comprises platinum nanoparticles.

According to an embodiment, preparing the powder composition comprises mixing catalyst particles of carbon-supported platinum or carbon-supported platinum alloy with filler particles, for example filler particles of bare carbon black,

According to an embodiment, heating is performed at a temperature below 200°C, preferably below 120°C, and even more preferably below 90°C.

Thanks to the laser light source used during the heating step, heating for producing the catalyst layer can be performed at low temperature. This low temperature requires less energy to be produced and reduces the method footprint. Moreover, this low temperature reduces the ignition risk during heating, especially if the deposited suspension comprises a solvent such as an organic solvent.

According to an embodiment, the suspension comprises organic solvent.

According to an embodiment, the deposited suspension is arranged in a box during heating, the box being connected to an air supply, the box being connected to a suction unit, the method further including providing an airflow inside the box from the air supply and withdrawing an airflow from inside the box through the suction unit so as to renew air around the deposited suspension inside the box during heating.

Air renewal during heating avoids ignition risks linked to the solvent in the deposited suspension and temperature involved during heating.

The airflow may be controlled to ensure better efficiency during heating. In other words, the airflow provided inside the box is preferably controlled during heating. To this end, the box may include a pressure indicator with a pressure gauge. As an example, the airflow regulation may be performed with a maximum airflow injection of 1100 l/min (66m³/h). According to an embodiment, the airflow is provided inside the box from the air supply between 0.3 bar and 7 bar.

According to an embodiment, the box is a closed box. According to an embodiment, the box has a first opening connected to the airflow supply and a second opening connected to the suction unit.

According to an embodiment, heating comprises applying a constant laser power for drying the deposited suspension.

Such constant power for the laser light source is simple to apply and provides satisfactory drying of the catalyst layer. Heating duration may be defined as a function of the laser light source power. For examples, the deposited suspension may be heated by the laser light source with a laser power of 0.15W/cm² during 110s, the deposited suspension may be heated by the laser light source with a laser power of 0.21W/cm² during 80s, the deposited suspension may be heated by the laser light source with a laser power of 0.24W/cm² during 60s, the deposited suspension may be heated by the laser light source with a laser power of 0.27W/cm² during 45s or the deposited suspension may be heated by the laser light source with a laser power of 0.30W/cm² during 42s.

According to an embodiment, the laser light source comprises a single laser. In this case, the deposited suspension may be heated by said single laser with a 5W laser power during 110s, the deposited suspension may be heated by the laser with a 7W laser power during 80s, the deposited suspension may be heated by the laser with a 8W laser power during 60s, the deposited suspension may be heated by the laser with a 9W laser power of during 45s or the deposited suspension may be heated by the laser with a 10W laser power during 42s.

According to an embodiment, the laser light source comprises a plurality of laser.

According to an embodiment, heating comprises applying a variable laser power for drying the deposited suspension.

According to an embodiment, laser light source power variation may be obtained by a single laser, the method further comprising power variation of said single laser during heating.

According to an embodiment, heating comprises applying a plurality of laser radiations by a plurality of lasers. In an embodiment, each laser of the plurality of lasers have a respective laser power.

In other words, laser light source power variation may be obtained by a plurality of lasers, for example each laser of the plurality of lasers having a corresponding laser power for drying the deposited suspension, the laser light source power variation being obtained by activating some of the plurality of lasers for each step of the drying step, the deposited suspension being therefore heated successively by the activated lasers of said plurality of lasers.

According to an embodiment, the method for manufacturing the catalyst layer further comprises providing the deposited suspension to be heated by the laser light source through a ramping device.

Such a ramping device allows continuously providing of a plurality of deposited suspensions to the laser light source so as to produce a plurality of catalyst layers. Moreover, in the embodiment having a plurality of lasers each of said lasers having a respective laser power, the ramp may guide the deposited suspension to be heated by said plurality of lasers. In other words, in an embodiment, laser power is variable as a function of the location of the deposited suspension on the ramp of the ramping device. Variable laser power may reduce drying time and limit the drying temperature below 90°C. This temperature below 90°C is advantageous with suspension comprising platinum nanoparticles for which the maximum heating temperature is preferably below 100°C.

In a preferred embodiment, during the heating step, heating comprises a first heating duration of 6s with a laser power of 20W for activated laser(s) of the laser light source, a second heating duration of 2s with a laser power of 18W for activated laser(s) of the laser light source, a third heating duration of 2s with a laser power of 12W for activated laser(s) of the laser light source, a fourth hating duration of 4s with a laser power of 10W for activated laser(s) of the laser light source and a fifth heating duration of 16s with a laser power of 8W for activated laser(s) of the laser light source. This heating step with variable laser power provides a good drying of the catalyst layer with a short heating duration, around 30s, and keeps the temperature below 100°C, which is advantageous in case of catalyst layer comprising platinum.

Preferably, the box comprises a ramping opening allowing insertion and withdrawal of the deposited suspension inside the box through the ramp of the ramping device.

According to an embodiment, the method further comprises, prior to depositing the suspension on the substrate, depositing on the substrate a thermal insulating frame, said thermal insulating frame having a hollow, the suspension being deposited on the substrate in said hollow.

Such thermal insulating frame avoids any unnecessary heat transfer during heating. Preferably, the hollow is arranged in the center of the thermal insulating frame.

Thanks to the method for manufacturing the catalyst layer using a laser light source for heating and drying the deposited suspension to obtain the catalyst layer, energy efficiency is improved and CO2 emission is greatly reduced compared to those involves when drying the catalyst layer with conventional ovens. Moreover, the method for manufacturing the catalyst layer according to the invention is faster than with conventional ovens.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a schematic view of a device for manufacturing a catalyst layer with a method for manufacturing a catalyst layer according to a first embodiment of the invention;
- FIG.2 is a graphic showing drying time required for manufacturing a catalyst layer according to a plurality of drying method;
- FIG.3 is a graphic showing the maximum reach temperatures when drying a catalyst layer with the plurality of drying method used in figure 2;
- FIG.4 is a graphic showing CO2 produced when drying a catalyst layer with the plurality of drying method used in figure 2;
- FIG.5 is a graphic showing energy efficiency for drying when drying a catalyst layer with the plurality of drying method used in figure 2;

### DETAILED DESCRIPTION OF EMBODIMENTS

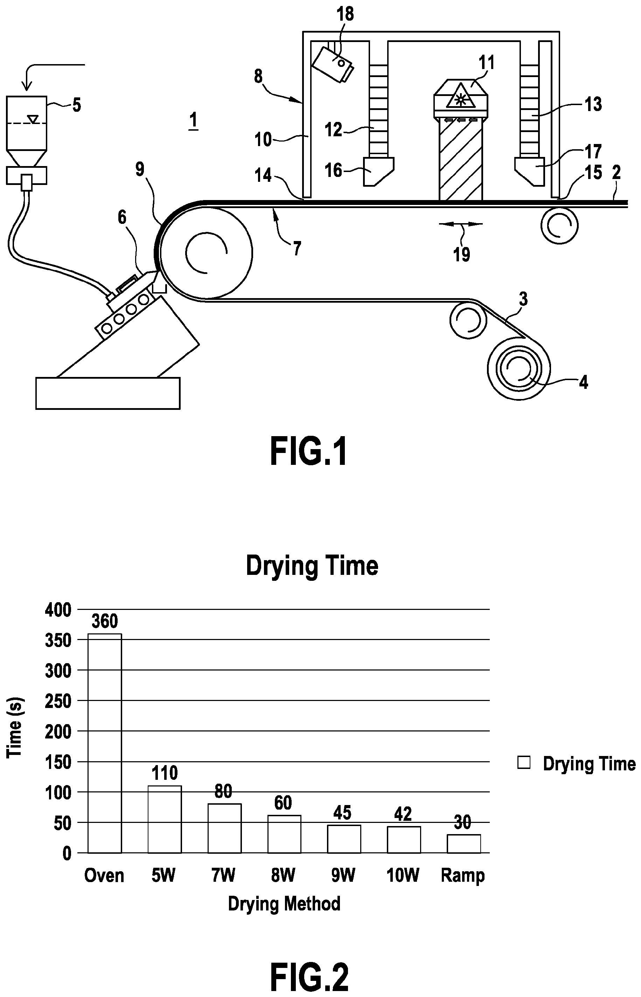

Figure 1 shows a device 1 for manufacturing a catalyst layer 2 for a fuel cell with a method according to a first embodiment of the invention. This device 1 comprises a substrate 3 wound onto a roller 4, a suspension tank 5, a suspension applicator 6, a ramp 7 and a heating device 8.

In order to apply a suspension 9 stored in the suspension tank 4, the substrate 3 is unwound from roller 4 to feed the suspension applicator 6. The suspension applicator 6 is also fed by the suspension tank 5 and configured to apply the suspension 9 on the substrate 3.

The suspension 9 stored in the suspension tank 5 is a preparation obtained by mixing a powder composition with a liquid medium.

The powder composition comprises catalyst particles of carbon-supported platinum or carbon-supported platinum alloy with filler particles, for example filler particles of bare carbon black. As an example, a mass percentage of platinum in the powder composition lies in the range of 10-60%, and a total mass percentage of carbon in the powder composition lies in the range of 40-90%.

The liquid medium used for preparing the suspension 9 includes, for example, organic solvent such as Diacetone Alcohol or Ethanol or propanol and water.

In the embodiment shown on figure1, the suspension applicator 6 includes a nozzle which spays the suspension 9 on a face of the substrate 3 provided by the roller 4.

In a non-shown embodiment, the device 1 may also comprise a mask applicator in order to apply a thermal insulation frame on the substrate 3 prior to the suspension application by the suspension applicator 6. Such a thermal insulation frame includes a hollow center and the nozzle of the suspension applicator 6 is configured to fill said hollow center with sprayed suspension 9. In other words, the suspension applicator 6 applies the suspension 9 on the substrate 3 in a surface of the substrate 3 defined by the hollow in the thermal insulation frame.

The suspension 9 deposited on the substrate 3, optionally including the thermal insulation frame, is provided to the heating device 8 by the ramp 7.

The heating device 8 includes a box 10, a laser light source 11, an airflow supplier 12 and a suction unit 13.

The box 10 has an inlet opening 14 and an outlet opening 15. The ramp 7 passes through the box 10 from the inlet opening 14 to the outlet opening 15 so as to move the suspension 9 deposited on the substrate 3 through the heating device 8 inside the box 10.

The laser light source 11 is arranged in the box 10. This laser light source 11 comprises at least one laser arranged to emit laser radiations toward the ramp 7, and more particularly toward the suspension 9 deposited on he substrate 3. These laser radiations aim to heat the deposited suspension 9 to dry it and form the catalyst layer 2 on the substrate 3. Thus, the laser light source 11 defines a drying zone 19 inside the box 10. The ramp 7 move the deposited suspension 9 along the drying zone 19 to ensure deposited suspension 9 drying. The laser light source 11 is configured to provide heat to the deposited suspension 9 depending on the method used for drying said deposited suspension 9, as explained below. Once the deposited suspension 9 has been dried to form the catalyst layer 2 on the substrate 3, the ramp 7 move the catalyst layer 2 outside the box 10 throu.

When heating the deposited suspension 9 thanks to the laser light source 11 inside the box 10, solvent from the deposited suspension 9 is emitted inside the box 10. This solvent improves the ignition risk due to heating by the laser light source 11.

To avoid ignition, the airflow supplier 12 has an injection nozzle 16 arranged to inject air inside the box 10. Preferably, the injection nozzle 16 is arranged in the box 10 to send said an airflow towards the deposited suspension 9 heated by the laser light source 11. Moreover, the suction unit 13 comprises a suction nozzle 17 to withdraw air from inside the box 10. This suction nozzle 13 is preferably arranged so as to withdraw air around the deposited suspension 9 heated by the laser light source 11. The airflow supplier 12 and the suction unit 13 ensure air renewal, including emitted solvent, around the deposited suspension 9 during heating avoiding ignition in the box 10.

Both the airflow supplier 12 and the suction unit 13 may have monitoring devices to control airflow regulation in the box 10. To ensure better efficiency during heating, the airflow regulation may be performed with a maximum airflow of 1100 l/min (66m³/h). This airflow may be provided inside the box between 0.3 bar and 7 bar.

In the embodiment shown in figure 1, a survey equipment 18 is arranged inside the box 10 to survey the deposited suspension 9 during heating. This survey equipment may comprise any sensor able to survey the deposited suspension 9 and its environment during heating. Such sensors may be a camera as illustrated on figure 1, a pressure sensor, a temperature sensor, or any other kind of sensor. These sensors may be linked to the airflow supplier 12 and the suction unit 13 to automatically control the airflow inside the box 10.

The method for manufacturing the catalyst layer 2 using the above described device 1 comprises in a first step preparing the suspension 9. As explained above, this suspension 9 is prepared by mixing a powder composition comprising catalyst particles with a liquid medium and filling the suspension tank 5 with said suspension 9.

In a second step, the suspension 9 is deposited on the substrate 3. To this end, the substrate 3 is unwound from roller 4 and fed the suspension applicator 5 which sprays the suspension 9 on substrate 3. Optionally, a thermal insulation frame having an hollow center is applied on the substrate 3 prior to spraying the suspension 9 on substrate 3. In this case, the suspension applicator 5 sprays the suspension 9 inside the hollow center of the thermal insulation frame.

Once the suspension 9 has been sprayed on the substrate 9, the ramp 7 guides the deposited suspension 9 to the heating device 8. The deposited suspension 9 is inserted inside the box 10 through the inlet opening 14 and guided to the drying zone 19.

According to a first embodiment of the invention, the laser light source 11 applies a constant power to emit laser radiations toward the deposited suspension 9 in the drying zone 19. The ramp 7 is configured to keep the deposited suspension 9 inside the drying zone 19 during a drying duration depending on the laser light source 11 power.

According to a first configuration, the laser light source 11 emits laser radiations in the drying zone 19 with a constant power of 0.15W/cm² for 110 seconds. According to a second configuration, the laser light source 11 emits laser radiations in the drying zone 19 with a constant power of 0.21W/cm² for 80 seconds. According to a third configuration, the laser light source 11 emits laser radiations in the drying zone 19 with a constant power of 0.24W/cm² for 60 seconds. According to a fourth configuration, the laser light source 11 emits laser radiations in the drying zone 19 with a constant power of 0.27W/cm² for 45 seconds. According to a fifth configuration, the laser light source 11 emits laser radiations in the drying zone 19 with a constant power of 0.30W/cm² for 42 seconds.

According to a second embodiment of the invention, the laser light source 11 applies a variable power to emit laser radiations toward the deposited suspension 9 in the drying zone 19. In a first configuration, the laser light source 11 comprise at least one laser with variable power to apply variable laser radiations in the drying zone 19. The ramp 7 is configured to keep the deposited suspension 9 inside the drying zone 19 during a drying duration corresponding to the laser power variation to ensure that the deposited suspension 9 is heated with the respective duration of each laser power during the laser power variation.

In a second configuration, the laser light source 11 comprises a plurality of lasers, at least one and preferably each of said plurality of lasers is dedicated to apply laser radiations with a corresponding laser power to a dedicated portion of the drying zone 19. Thus, the drying zone 19 comprises a plurality of portions each portion being defined with a respective laser power provided by at least one laser of the plurality of lasers. The ramp 7 is configured to keep the deposited suspension 9 inside each portion of the drying zone 19 as a function of the laser power defined for said corresponding portion of the drying zone 19.

In other words, the ramp 7 moves the deposited suspension 9 in a first portion of the drying zone 19 and keep the deposited suspension 9 in said first portion under laser radiations with a first laser power during a first duration defined as a function of the first laser power. After the first duration, the ramp 7 moves the deposited suspension 9 in the following portions of the drying zone 19 and keep the deposited suspension 9 in said following portions under laser radiations with respective laser powers during a corresponding duration defined as a function of said laser power.

In the example shown on figures 2 to 5, the rightward column, corresponding to the drying method according to the second embodiment having a variable laser power, is performed with a variable power in which, for each active laser of the laser light source, the deposited suspension 9 is heated with a first laser power of 20W for 6 seconds, a second laser power of 18W for 2 seconds, a third laser power of 12W for 2 seconds, a fourth laser power of 10W for 4 seconds and a fifth laser power of 8W for 16 seconds. Moreover, in said figures 2 to 5, the constant laser power shown for the drying method according to the first embodiment is given for only one emitter of the laser light source. Thus, in this figures, a 5W constant power corresponds to a laser power of 0.15W/cm², a 7W constant power corresponds to a laser power of 0.21W/cm², a 8W constant power corresponds to a laser power of 0.24W/cm², a 9W constant power corresponds to a laser power of 0.27W/cm² and a 10W constant power corresponds to a laser power of 0.30W/cm².

Figure 2 shows the drying time required to obtain a catalyst layer 2 depending on the drying method used for manufacturing said catalyst layer 2, said catalyst layer 2 being made from the same suspension 9 and having the same properties after drying with these different methods. As shown on said figure 2, such a catalyst layer 2 obtained with the conventional oven drying method requires a heating duration of 360 seconds. As shown on figure 2, the same catalyst layer 2 obtained thanks to the drying method according to the above described first embodiment of the invention, with a constant laser power, requires 110 seconds with a laser power of 5W, i.e 0.15W/cm², 80 seconds with a laser power of 7W, i.e 0.21W/cm², 60 seconds with a laser power of 8W, i.e 0.24W/cm², 45 seconds with a laser power of 9W, i.e 0.27W/cm², and 42 seconds with a laser power of 10W, i.e 0.30W/cm². Moreover, as shown on figure 2, the same catalyst layer 2 obtained thanks to the drying method according to the above described second embodiment of the invention, with a variable laser power as described in the previous paragraph, requires only 30 seconds to be dried.

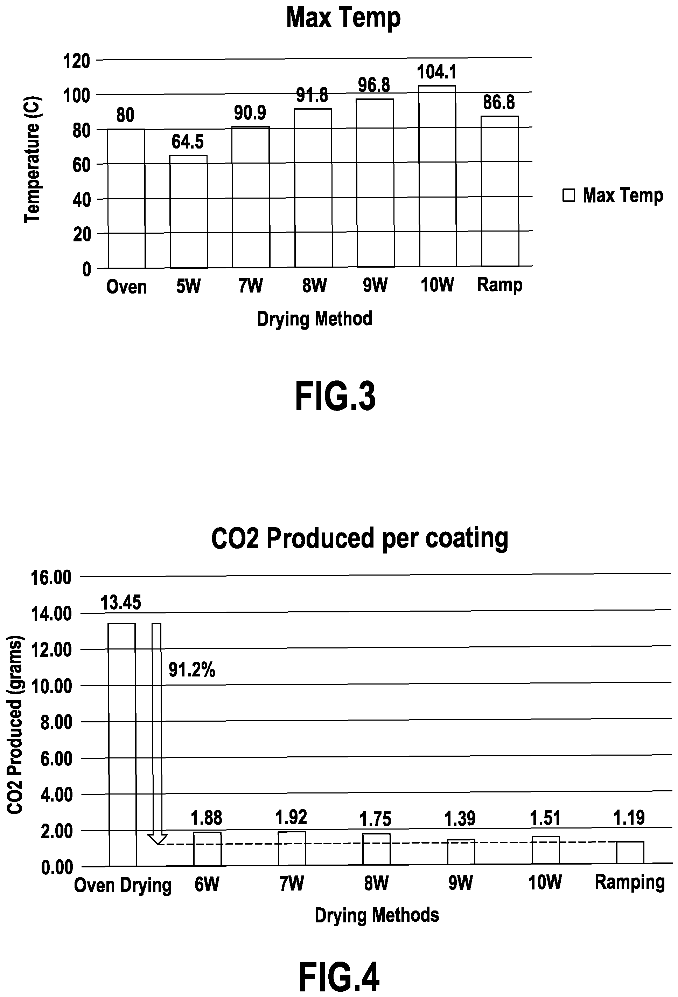

Figure 3 shows the maximum temperature involved to obtain a catalyst layer 2 depending on the drying methods used in figure 2. As shown on said figure 3, such a catalyst layer 2 obtained with the conventional oven drying method reaches a temperature of 80°C. As shown on figure 3, the same catalyst layer 2 obtained thanks to the drying method according to the above described first embodiment of the invention, with a constant laser power, reaches a maximum temperature of 64.5°C with a laser power of 5W, i.e 0.15W/cm², 80.9°C with a laser power of 7W, i.e 0.21W/cm², 91.8°C with a laser power of 8W, i.e 0.24W/cm², 96.8°C with a laser power of 9W, i.e 0.27W/cm² and 104.1°C with a laser power of 10W, i.e 0.30W/cm². Moreover, as shown on figure 3, the same catalyst layer 2 obtained thanks to the drying method according to the above described second embodiment of the invention reaches a maximum temperature of 86.8°C.

The method for manufacturing a catalyst layer 2 according to the invention provides a faster drying time than drying with oven while maintaining a low temperature to obtain the same catalyst layer 2. With the method according to the first embodiment, the higher is the laser power, the faster is the drying time but also the higher is the reached temperature. However, the method according to the second embodiment provides a maximum temperature below 90°C with an even faster drying time, which is particularly advantageous in case of catalyst layer 2 made from a suspension having platinum particles with organic solvent.

Figure 4 shows the CO2 production to obtain a catalyst layer 2 depending on the drying methods used in figure 2. As shown in said figure 4, the oven method produces 13.45grams of CO2 while the method according to the first embodiment of the invention produces between 1.51 and 1.88 grams of CO2 and the method according to the second embodiment of the invention produces only 1.19 grams of CO2. Thanks to the invention, CO2 production is greatly reduced compared to oven drying method, reaching a reduction of 91.2% when using the method according to the second embodiment of the invention.

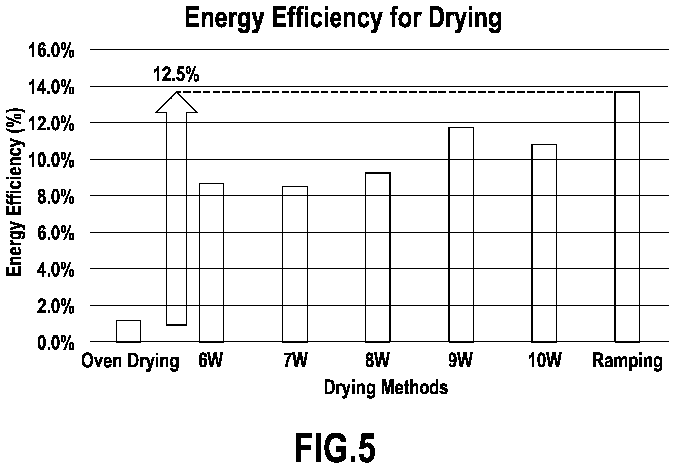

Figure 5 shows energy efficiency for drying to obtain a catalyst layer 2 depending on the drying methods used in figure 2. As shown in said figure 5, the oven method has a very low energy efficiency, below 2%. On the contrary, the methods according to the first embodiment of the invention have an energy efficiency between 8% and 12% while the method according to the second embodiment of the invention reaches an energy efficiency around 14%, corresponding to an energy efficiency improvement of around 12.5% compared to the energy efficiency involved with the oven drying method.

As shown in view of figures 4 and 5 the method for manufacturing a catalyst layer according to the invention has a very good energy efficiency with limited CO2 emission while maintain good performances of the catalyst layer.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A method for manufacturing a catalyst layer (2) for a fuel cell, comprising:
- preparing a suspension (9) by mixing a powder composition with a liquid medium, said powder composition comprising catalyst particles,
- depositing the suspension (9) on a substrate (3), and
- heating the deposited suspension (9) to obtain the catalyst layer (2) by drying,
**characterized in that** the method further comprises emitting laser radiations toward the deposited suspension (9) with a laser light source (11) for drying said deposited suspension (9).

2. The method according to claim 1, wherein the deposited suspension (9) comprises platinum nanoparticles.

3. The method according to claim 1 or 2, wherein heating is performed at a temperature below 200°C.

4. The method according to any of claims 1 to 3, wherein the deposited suspension (9) is arranged in a box (10) during heating, the box (10) being connected to an air supply (12), the box being connected to a suction unit (13), the method further including providing an airflow inside the box (10) from the air supply (12) and withdrawing an airflow from inside the box (10) through the suction unit (13) so as to renew the air around the deposited suspension (9) inside the box (10) during heating.

5. The method according to any of claims 1 to 4, wherein heating comprises applying a constant laser power for drying the deposited suspension (9).

6. The method according to any of claims 1 to 4, wherein heating comprises applying a variable laser power for drying the deposited suspension (9).

7. The method according to claim 6, wherein heating comprises applying a plurality of laser radiations by a plurality of lasers, each laser of the plurality of lasers having a respective laser power.

8. The method according to claim 6 or 7, wherein heating comprises a first heating duration of 6s with a laser power of 20W for activated laser(s) of the laser light source, a second heating duration of 2s with a laser power of 18W for activated laser(s) of the laser light source, a third heating duration of 2s with a laser power of 12W for activated laser(s) of the laser light source, a fourth hating duration of 4s with a laser power of 10W for activated laser(s) of the laser light source and a fifth heating duration of 16s with a laser power of 8W for activated laser(s) of the laser light source.

9. The method according to any of claims 1 to 8, further comprising providing the deposited suspension (9) to be heated by the laser light source (11) through a ramping device (7).

10. The method according to any of claims 1 to 9, further comprising, prior to depositing the suspension (9) on the substrate (3), depositing on the substrate (3) a thermal insulating frame, said thermal insulating frame having a hollow, the suspension (9) being deposited on the substrate (3) in said hollow.
